# EUROPEAN PATENT SPECIFICATION

(11) **EP 2 622 032 B1**
(45) Date of publication and mention of the grant of the patent: **28.11.2018**
(21) Application number: 11764928.5
(22) Date of filing: 23.09.2011
(51) Int. Cl.: C09J 7/38, C09J 133/04

(54) **HIGHLY TACKIFIED, HOT MELT PROCESSABLE, ACRYLATE PRESSURE SENSITIVE ADHESIVES**
STARK KLEBRIGE HEISSSCHMELZVERARBEITBARE ACRYLATHAFTKLEBER
AUTOCOLLANTS À BASE D'ACRYLATE THERMOFUSIBLES RENDUS HAUTEMENT COLLANT

(30) Priority: 30.09.2010 US 388069 P
(43) Date of publication of application: 07.08.2013
(73) Proprietor: 3M Innovative Properties Company, St. Paul, MN 55133-3427 (US)
(72) Inventor: SATRIJO, Andrew,, Saint Paul, MN 55133-3427 (US); LEHMANN, Megan, P., Saint Paul, MN 55133-3427 (US); FONG, Nathan, B., Saint Paul, MN 55133-3427 (US); HAMER, Craig, E., Saint Paul, MN 55133-3427 (US); JACOBSEN, John, R., Saint Paul, MN 55133-3427 (US); ELLIS, Mark, F., Saint Paul, MN 55133-3427 (US)
(74) Representative: Vossius & Partner Patentanwälte Rechtsanwälte mbB
(86) International application number: PCT/US2011/052953
(87) International publication number: WO 2012/044529

(56) References cited:
- WO-A1-2008/070386
- WO-A1-2010/002557
- WO-A1-2010/147811
- WO-A2-01/57152

## Description

### Field of the Disclosure

The present disclosure relates generally to the field of adhesives, more specifically to the field of pressure sensitive adhesives and tapes and articles prepared therefrom, especially hot melt processable pressure sensitive adhesives that contain relatively high levels of tackifying agents.

### Background

Adhesives have been used for a variety of marking, holding, protecting, sealing and masking purposes. Adhesive tapes generally comprise a backing, or substrate, and an adhesive. One type of adhesive, a pressure sensitive adhesive, is particularly preferred for many applications.

Pressure sensitive adhesives are well known to one of ordinary skill in the art to possess certain properties at room temperature including the following: (1) aggressive and permanent tack, (2) adherence with no more than finger pressure, (3) sufficient ability to hold onto an adherend, and (4) sufficient cohesive strength to be removed cleanly from the adherend. Materials that have been found to function well as pressure sensitive adhesives are polymers designed and formulated to exhibit the requisite viscoelastic properties resulting in a desired balance of tack, peel adhesion, and shear strength. The most commonly used polymers for preparation of pressure sensitive adhesives are natural rubber, synthetic rubbers (e.g., styrene/butadiene copolymers (SBR) and styrene/isoprene/styrene (SIS) block copolymers), various (meth)acrylate (e.g., acrylate and methacrylate) copolymers and silicones. Each of these classes of materials has advantages and disadvantages.

### Summary

The present disclosure describes hot melt processable pressure sensitive adhesives and methods of preparing hot melt processable pressure sensitive adhesives. The subject-matter of the present invention is defined in claims 1-10 as attached. Embodiments described herein which are not covered by the claims merely serve to illustrate the technical context of the present invention. The methods of preparing hot melt processable pressure sensitive adhesives comprise providing a hot melt mixing apparatus, providing an elastomeric (meth)acrylate random copolymer contained within a thermoplastic pouch, providing greater than 50 parts by weight per 100 parts by weight of hot melt processable elastomeric (meth)acrylate random co-polymer of at least one tackifying resin, mixing the elastomeric (meth)acrylate random copolymer and tackifying resin in the hot melt mixing apparatus to prepare a hot melt blend, removing the blend from the hot melt mixing apparatus, and forming a hot melt processable pressure sensitive adhesive. In some embodiments the elastomeric (meth)acrylate random copolymer includes a difunctional (meth)acrylate branching agent and a photosensitive crosslinking agent.

Also disclosed are adhesives. The adhesives comprise a hot melt mixed blend, the hot melt blend comprising a hot melt processable elastomeric (meth)acrylate random copolymer within a thermoplastic pouch, and greater than 50 parts by weight per 100 parts by weight of hot melt processable elastomeric (meth)acrylate random co-polymer of at least one tackifying resin, wherein the adhesive comprises a hot melt processable pressure sensitive adhesive.

### Detailed Description

Many classes of pressure sensitive adhesive are provided as solutions, often solutions containing large amounts of solvents. Upon coating or dispensing, the solvent needs to be removed to produce an adhesive layer. Often the solvent is removed through the use of elevated temperature processing such as heating with an oven. Such solvent removal steps can add cost to the formed articles because solvent removal requires additional steps. Not only are additional steps involved, often these steps require specialized care, precautions and equipment because the solvents are volatile and generally flammable. In addition, shipment of adhesive solutions adds additional expense because of the added weight of solvent and may require special shipment precautions due to the presence of solvent. Environmental concerns are also an issue with solvent borne adhesive systems, since, even with the use of solvent reclamation equipment, solvent release to the environment is likely.

Therefore, 100% solids adhesive systems have been developed. Among these 100% solids systems are hot melt processable adhesives, including hot melt processable pressure sensitive adhesives. Difficulties have arisen when solvent processing has been replaced by hot melt processing. Often it is difficult to replicate the properties of solvent delivered adhesive layers with hot melt delivered systems. In particular, because the adhesive must pass through the extruder or other hot melt processing equipment, the melt viscosity and the molecular weight of polymers that can be used is restricted. For example, it can be difficult to produce adhesives with high shear properties due to the molecular weight restrictions of hot melt processing.

Disclosed herein a variety of techniques either used singly or in combination to give hot melt processable pressure sensitive adhesives that replicate the properties of solvent delivered adhesives. It can be particularly difficult to reproduce these properties in pressure sensitive adhesives that contain relatively high levels of tackifying resins because the high levels of tackifying resin can reduce the cohesive strength of the polymer matrix and therefore the shear strength of the pressure sensitive adhesive. Techniques for overcoming the shortcomings of hot melt processing involve, for example, modification of the elastomeric (meth)acrylate random copolymers. These modifications include branching and molecular weight control. Branching can be achieved through the use of multifunctional monomers, and control of molecular weight can be achieved through the absence of or very limited amounts of chain transfer agents in polymerizable mixtures used to prepare the elastomeric (meth)acrylate random copolymers. Chain transfer agents are typically used with polymers prepared in thermoplastic pouches. Chain transfer agents are known to decrease the molecular weight when used, so the absence of chain transfer agents gives an increase in molecular weight. Of course, these techniques to give branched and higher molecular weight polymers must be balanced with the need for the polymers to be hot melt processable. Additionally, the elastomeric (meth)acrylate random copolymer matrix can be cross-linked after hot melt processing through the use of copolymerizable cross-linking agents. Each of these techniques will be elaborated in greater detail below.

Besides the detrimental effects of hot melt processing which the methods and adhesives of this disclosure overcome, the hot melt processing can also produce some desirable effects which are not present in solvent delivered adhesives. Examples of these effects are, for example, the absence of bubble defects in the adhesive layer, especially when the adhesive layers are relatively thick, such as, for example, a thickness of 127 micrometers (5 mils). Also, because the molten polymer composition is typically pulled from a die by a moving web, the polymers are partially aligned in the coating direction. The alignment leads to anisotropic properties in the adhesive layer. These anisotropic properties can give increases in, for example, stress relaxation, tensile strength, and even shear holding power, relative to solvent delivered adhesive layers.

Disclosed herein are hot melt processable pressure sensitive adhesives that can be used to prepare a wide range of adhesive tapes and articles. Many of these tapes and articles contain backings or other substrates to support the layer of adhesive. Other adhesive tapes and articles do not contain a backing or substrate layer and therefore are free standing adhesive layers. Double-sided tapes are an example of such an adhesive article. Double-sided tapes, also called "transfer tapes", are adhesive tapes that have adhesive on both exposed surfaces. In some transfer tapes, the exposed surfaces are simply the two surfaces of a single adhesive layer. Other transfer tapes are multi-layer transfer tapes with at least two adhesive layers that may be the same or different, and in some instances intervening layers that may not be adhesive layers. For example, a multi-layer transfer tape may be a 3 layer construction with an adhesive layer, a film layer and another adhesive layer. The film layer can provide handling and/or tear strength or other desirable properties. In this disclosure, double-sided adhesives are prepared that comprise one free standing layer of pressure sensitive adhesive.

Since the double-sided adhesives are free standing, they must have sufficient handling strength to be handled without the presence of a supporting layer. However, in many embodiments it is desirable that the adhesive layer be readily tearable, that is to say that the adhesive layer can be readily torn by hand without requiring the use of a cutting implement such as a knife, scissors, or a razor blade.

The hot melt processable pressure sensitive adhesives disclosed herein are hot melt mixed blends comprising a hot melt processable elastomeric (meth)acrylate random copolymer, a thermoplastic material, and relatively high levels of one or more tackifying resins. By relatively high levels of one or more tackifying resins, it is meant that the hot melt processable pressure sensitive adhesives are "highly tackified" having up to or greater than 50 parts by weight of tackifying resin per 100 parts by weight of hot melt processable elastomeric (meth)acrylate random copolymer. The recitation of numerical ranges by endpoints includes all numbers subsumed within that range (e.g. 1 to 5 includes 1, 1.5, 2, 2.75, 3, 3.80, 4, and 5) and any range within that range.

As used in this specification and the appended claims, the singular forms "a", "an", and "the" encompass embodiments having plural referents, unless the content clearly dictates otherwise. For example, reference to "a layer" encompasses embodiments having one, two or more layers. As used in this specification and the appended claims, the term "or" is generally employed in its sense including "and/or" unless the content clearly dictates otherwise.

The term "adhesive" as used herein refers to polymeric compositions useful to adhere together two adherends. Examples of adhesives are pressure sensitive adhesives.

Pressure sensitive adhesive compositions are well known to those of ordinary skill in the art to possess properties including the following: (1) aggressive and permanent tack, (2) adherence with no more than finger pressure, (3) sufficient ability to hold onto an adherend, and (4) sufficient cohesive strength to be cleanly removable from the adherend. Materials that have been found to function well as pressure sensitive adhesives are polymers designed and formulated to exhibit the requisite viscoelastic properties resulting in a desired balance of tack, peel adhesion, and shear holding power. Obtaining the proper balance of properties is not a simple process.

The term "(meth)acrylate" refers to monomeric acrylic or methacrylic esters of alcohols. Acrylate and methacrylate monomers, oligomers, or polymers are referred to collectively herein as "(meth)acrylates".

The term "random copolymer" refers to polymers prepared from at least two different monomers, wherein the monomers are present in the polymer in a random distribution, that is to say the polymers are not strictly alternating copolymers, periodic copolymers or block copolymers.

The term "alkyl" refers to a monovalent group that is a radical of an alkane, which is a saturated hydrocarbon. The alkyl can be linear, branched, cyclic, or combinations thereof and typically has 1 to 20 carbon atoms. In some embodiments, the alkyl group contains 1 to 18, 1 to 12, 1 to 10, 1 to 8, 1 to 6, or 1 to 4 carbon atoms. Examples of alkyl groups include, but are not limited to, methyl, ethyl, n-propyl, isopropyl, n-butyl, isobutyl, tert-butyl, n-pentyl, n-hexyl, cyclohexyl, n-heptyl, n-octyl, and 2-ethylhexyl.

The term "aryl" refers to a monovalent group that is aromatic and carbocyclic. The aryl can have one to five rings that are connected to or fused to the aromatic ring. The other ring structures can be aromatic, non-aromatic, or combinations thereof. Examples of aryl groups include, but are not limited to, phenyl, biphenyl, terphenyl, anthryl, naphthyl, acenaphthyl, anthraquinonyl, phenanthryl, anthracenyl, pyrenyl, perylenyl, and fluorenyl.

The terms "glass transition temperature" and "Tg" are used interchangeable and refer to the glass transition temperature of a material or a mixture. Unless otherwise indicated, glass transition temperature values are determined by Differential Scanning Calorimetry (DSC).

The pressure sensitive adhesives of this disclosure may be prepared by a variety of hot melt techniques. Generally, the methods comprise providing a hot melt mixing apparatus, providing an elastomeric (meth)acrylate random copolymer contained in a thermoplastic pouch, providing greater than 50 parts by weight of at least one tackifying resin per 100 parts by weight of elastomeric (meth)acrylate random copolymer, mixing the elastomeric (meth)acrylate random copolymer in a thermoplastic pouch and tackifying resin in the hot melt mixing apparatus to prepare a hot melt blend, removing the blend from the hot melt mixing apparatus to form a hot melt processable pressure sensitive adhesive. As described below, a variety of additional additives can be included in the hot melt blend including one or more plasticizers, crosslinkers, UV stabilizers, antistatic agents, colorants, antioxidants, fungicides, bactericides, organic and/or inorganic filler particles, and the like.

A variety of hot melt mixing techniques using a variety of hot melt mixing equipment are suitable for preparing the pressure sensitive adhesives of this disclosure. Both batch and continuous mixing equipment may be used. Examples of batch methods include those using a BRABENDER (e. g. a BRABENDER PREP CENTER, commercially available from C.W. Brabender Instruments, Inc.; South Hackensack, NJ) or BANBURY internal mixing and roll milling equipment (e.g. equipment available from Farrel Co.; Ansonia, CN). Examples of continuous methods include single screw extruding, twin screw extruding, disk extruding, reciprocating single screw extruding, and pin barrel single screw extruding. Continuous methods can utilize distributive elements, pin mixing elements, static mixing elements, and dispersive elements such as MADDOCK mixing elements and SAXTON mixing elements. A single hot melt mixing apparatus may be used, or a combination of hot melt mixing equipment may be used to prepare the hot melt blends and the pressure sensitive adhesives of this disclosure. In some embodiments, it may be desirable to use more than one piece of hot melt mixing equipment. For example, one extruder, such as, for example, a single screw extruder, can be used to hot melt process the hot melt processable elastomeric (meth)acrylate random copolymer contained within a thermoplastic pouch. The output of this extruder can be fed into a second extruder, for example, a twin screw extruder for hot melt mixing with the additional components.

The output of the hot melt mixing is coated onto a substrate to form an adhesive layer. If a batch apparatus is used, the hot melt blend can be removed from the apparatus and placed in a hot melt coater or extruder and coated onto a substrate. If an extruder is used to prepare the hot melt blend, the blend can be directly extruded onto a substrate to form an adhesive layer in a continuous forming method. In the continuous forming method, the adhesive can be drawn out of a film die and subsequently contacted to a moving plastic web or other suitable substrate. If the adhesive is to be part of a tape, the substrate may be a tape backing. In some methods, the tape backing material is coextruded with the adhesive from a film die and the multilayer construction is then cooled to form the tape in a single coating step. If the adhesive is to be a transfer tape, the adhesive layer may be a free standing film and the substrate may be a release liner or other releasing substrate. After forming, the adhesive layer or film can be solidified by quenching using both direct methods (e.g. chill rolls or water batch) and indirect methods (e.g. air or gas impingement).

If it is desired to crosslink the pressure sensitive adhesive layer, the adhesive layer can be subjected to a crosslinking process. If a photosensitive crosslinker is present, such as ABP described below, the adhesive layer can be exposed to high intensity UV lamps to effect crosslinking. If no crosslinker is present, crosslinking may be achieved by exposing the adhesive layer to high-energy electromagnetic radiation such as gamma or e-beam radiation.

A wide range of (meth)acrylate random copolymers contained within a thermoplastic pouch are suitable for use in the adhesives of this disclosure. Typically the elastomeric (meth)acrylate random copolymers are themselves pressure sensitive adhesives, or can upon addition of tackifying resin form a pressure sensitive adhesive. Therefore, elastomeric (meth)acrylate random copolymers are often referred to herein as adhesives or adhesive polymers. These adhesives and methods for preparing them are described, for example, in US Patent Nos. 5,804,610 (Hamer et al.) and 6,294,249 (Hamer et al.). Polymerization of (meth)acrylate polymers in a pouch provides for very convenient handling and dispensing of these inherently tacky polymers Tapes including such adhesives and methods of making such tapes are disclosed in WO 2008/070386 A1 (Waid et al.).

The above patent disclosures provide methods for making packaged viscoelastic compositions such as pressure sensitive adhesives, in which the packaging material is retained following polymerization (and thus becomes part of the final product). The methods comprise:
(a) providing a pre-adhesive composition which upon exposure to transmissive energy polymerizes to provide a hot melt processable (meth)acrylate random copolymer adhesive;
(b) substantially surrounding the pre-adhesive composition with a packaging material;
(c) exposing the pre-adhesive composition to transmissive energy capable of polymerizing the pre-adhesive composition; and
(d) allowing polymerization of the pre-adhesive composition to occur to provide the hot melt processable (meth)acrylate random copolymer adhesive.

The packaging material is selected such that it does not substantially adversely affect the desired adhesive properties of the hot melt processable (meth)acrylate random copolymer adhesive composition when the hot melt processable (meth)acrylate random copolymer adhesive composition and the packaging material are melted and mixed together. The desired adhesive properties, such as peel strength and shear strength, can be controlled by the choice of pre-adhesive composition, the packaging material, as well as other factors. The pre-adhesive composition preferably polymerizes to provide a thermoplastic hot melt adhesive upon exposure to transmissive energy.

Typically, the pre-adhesive composition is completely surrounded by the packaging material. Generally, from 0.1 to 500 grams of pre-adhesive composition is completely surrounded by the packaging material. The pre-adhesive composition typically has a melting point of 40°C or less, or even 25°C or less. The pre-adhesive composition generally has a viscosity at 25°C of less than 50 centipoise, but the viscosity may be higher, especially if fillers or other additives are present. The pre-adhesive composition may be a monomeric mixture or a pre-polymeric mixture. A pre-polymeric mixture is a syrup formed by the partial polymerization of the monomeric materials that can be polymerized to form a hot melt adhesive. Generally, the pre-polymeric mixture is a monomeric mixture.

Typically, the pre-polymerization mixture comprises 50 to 100 parts by weight of one or more monomeric acrylic or methacrylic esters of non-tertiary alkyl alcohols, with the alkyl groups having from 1 to 20 carbon atoms (e.g., from 3 to 18 carbon atoms). Suitable acrylate monomers include methyl acrylate, ethyl acrylate, n-butyl acrylate, lauryl acrylate, 2-ethylhexyl acrylate, cyclohexyl acrylate, iso-octyl acrylate, octadecyl acrylate, nonyl acrylate, decyl acrylate, isobornyl acrylate, and dodecyl acrylate. Also useful are aromatic acrylates, acrylates containing aryl groups, e.g., benzyl acrylate and cyclobenzyl acrylate.

Optionally, one or more monoethylenically unsaturated co-monomers may be polymerized with the acrylate monomers in amounts from about 0 to 50 parts co-monomer. One class of useful co-monomers includes those having a homopolymer glass transition temperature greater than the glass transition temperature of the acrylate homopolymer. Sometimes these monomers are referred to as "reinforcing co-monomers". Typically these monomers have a homopolymer glass transition temperature greater than 20°C. Examples of suitable co-monomers falling within this class include acrylic acid, acrylamide, methacrylamide, substituted acrylamides such as N,N-dimethyl acrylamide, itaconic acid, methacrylic acid, acrylonitrile, methacrylonitrile, vinyl acetate, N-vinyl pyrrolidone, isobornyl acrylate, cyano ethyl acrylate, N-vinylcaprolactam, maleic anhydride, hydroxyalkylacrylates, N,N-dimethyl aminoethyl (meth)acrylate, N,N-diethylacrylamide, beta-carboxyethyl acrylate, vinyl esters of neodecanoic, neononanoic, neopentanoic, 2-ethylhexanoic, or propionic acids (e.g., available from Union Carbide Corp. of Danbury, Conn. under the designation "Vynates"), vinylidene chloride, styrene, vinyl toluene, and alkyl vinyl ethers.

A second class of useful co-monomers includes those having a homopolymer glass transition temperature less than the glass transition temperature of the acrylate homopolymer. Examples of suitable co-monomers falling within this class include ethoxyethoxy ethyl acrylate (Tg=-71° C.) and methoxypolyethylene glycol 400 acrylate (Tg=-65° C.; available from Shin Nakamura Chemical Co., Ltd. under the designation "NK Ester AM-90G").

Additionally, one or more multifunctional ethylenically unsaturated monomers may be included in the pre-polymerization mixture. While the use of such monomers would typically lead to crosslinked polymers that would not be hot melt processable, the use of such monomers in low concentration can lead to highly branched polymers. Examples of such multifunctional ethylenically unsaturated monomers include, for example, multifunctional (meth)acrylate monomers. Multifunctional (meth)acrylates include tri(meth)acrylates and di(meth)acrylates (that is, compounds comprising three or two (meth)acrylate groups). Typically di(meth)acrylate monomers (that is, compounds comprising two (meth)acrylate groups) are used. Useful tri(meth)acrylates include, for example, trimethylolpropane tri(meth)acrylate, propoxylated trimethylolpropane triacrylates, ethoxylated trimethylolpropane triacrylates, tris(2-hydroxy ethyl)isocyanurate triacrylate, and pentaerythritol triacrylate. Useful di(meth)acrylates include, for example, ethylene glycol di(meth)acrylate, diethylene glycol di(meth)acrylate, triethylene glycol di(meth)acrylate, tetraethylene glycol di(meth)acrylate, 1,4-butanediol di(meth)acrylate, 1,6-hexanediol di(meth)acrylate, alkoxylated 1,6-hexanediol diacrylate, tripropylene glycol diacrylate, dipropylene glycol diacrylate, cyclohexane dimethanol di(meth)acrylate, alkoxylated cyclohexane dimethanol diacrylates, ethoxylated bisphenol A di(meth)acrylates, neopentyl glycol diacrylate, polyethylene glycol di(meth)acrylates, polypropylene glycol di(meth)acrylates, and urethane di(meth)acrylates. The branching agent 1,6-hexanediol diacrylate (HDDA) is particularly suitable. Typically the di(meth)acrylate branching agent is used in amounts ranging from 0.001 to 0.05 parts by weight per 100 parts by weight of (meth)acrylate monomers.

Generally, the pre-adhesive composition includes an appropriate initiator. For polymerization by ultraviolet light, a photoinitiator is included. Useful photoinitiators include substituted acetophenones such as benzyl dimethyl ketal and 1-hydroxycyclohexyl phenyl ketone, substituted alpha-ketols such as 2-methyl-2-hydroxypropiophenone, benzoin ethers such as benzoin methyl ether, benzoin isopropyl ether, substituted benzoin ethers such as anisoin methyl ether, aromatic sulfonyl chlorides, and photoactive oximes. The photoinitiator may be used in an amount from about 0.001 to about 5.0 parts by weight per 100 parts of total monomer, preferably from about 0.01 to about 5.0 parts by weight per 100 parts of total monomer, and more preferably in an amount from 0.1 to 0.5 parts by weight per 100 parts of total monomer.

The pre-adhesive mixture may also be polymerized by thermal polymerization. For thermal polymerization, a thermal initiator is included. Thermal initiators useful in the present invention include, but are not limited to azo, peroxide, persulfate, and redox initiators. The thermal initiator may be used in an amount from about 0.01 to about 5.0 parts by weight per 100 parts of total monomer, preferably from 0.025 to 2 weight percent.

A combination of thermal and photoinitiation may also be used to prepare hot melt processable (meth)acrylate random copolymer adhesives. For example, the pre-adhesive composition may be polymerized, e.g., in a reactive extruder, to a certain conversion using a thermal initiator, the resulting composition (still in a pre-adhesive state) combined with packaging material (e.g., in the form of a pouch or shell) and a photoinitiator, and the polymerization completed upon exposure to ultraviolet radiation. Conversely, the initial polymerization may be initiated by a photoinitiator, and the polymerization subsequently completed using a thermal initiator. The thermal and photoinitiator may also be used together, rather than being added sequentially.

The pre-adhesive composition may further comprise an effective amount of a crosslinking agent that may be activated after the adhesive has been hot melt processed. Typically, the amount ranges from about 0.01 to about 5.0 parts based upon 100 parts of components (a) plus (b). The crosslinking agent can be added to the polymerized adhesive before or during hot melt processing, or it can be added to the pre-adhesive composition. When added to the pre-adhesive composition, the crosslinking agent can remain intact as a separate species in the adhesive, or it can be co-polymerized with the monomers. Crosslinking is generally initiated after hot melt processing, and the crosslinking is generally initiated by ultraviolet radiation, or ionizing radiation such as gamma radiation or electron beam (the use of separate crosslinking agents being optional in the case of ionizing radiation). Examples of crosslinking agents that can be added after polymerization and before hot melt processing include multi-functional acrylates such as 1,6-hexanediol diacrylate and trimethylolpropane triacrylate, and substituted triazines such as 2,4-bis(trichloromethyl)-6-(4-methoxyphenyl)-s-triazine and 2,4-bis(trichloromethyl)-6-(3,4-dimethoxyphenyl)-s-triazine, as described in U.S. Pat. Nos. 4,329,384 (Vesley et al.) and 4,330,590 (Vesley). A class of crosslinking agents that are copolymerizable are the copolymerizable mono-ethylenically unsaturated aromatic ketone comonomers free of ortho-aromatic hydroxyl groups such as those disclosed in U.S. Pat. No. 4,737,559 (Kellen et al.). Specific examples include the copolymerizable photosensitive crosslinkers para-acryloxybenzophenone (ABP), para-acryloxyethoxybenzophenone (AEBP), para-N-(methylacryloxyethyl)-carbamoylethoxybenzophenone, para-acryloxyacetophenone, ortho-acrylamidoacetophenone, acrylated anthraquinones, and the like. The use of such crosslinking agents in the hot melt blends of this disclosure will be discussed further below. Typically, photosensitive copolymerizable crosslinking agents are incorporated into the elastomeric (meth)acrylate random copolymer at amounts that range from about 0.01 to about 0.5 parts by weight per 100 parts (meth)acrylate monomers.

Typically, the compositions described by Hamer et al. also include a chain transfer agent to control the molecular weight of the polymer. Chain transfer agents are materials which regulate free radical polymerization and are generally known in the art. Suitable chain transfer agents include halogenated hydrocarbons such as carbon tetrabromide; sulfur compounds such as lauryl mercaptan, butyl mercaptan, ethanethiol, isooctylthioglycolate (IOTG), 2-ethylhexyl thioglycolate, 2-ethylhexyl mercaptopropionate, 2-mercaptoimidazole, and 2-mercaptoethyl ether; and solvents such as ethanol, isopropanol, and ethyl acetate. Typically, the elastomeric (meth)acrylate random copolymers prepared for use in the adhesives of this disclosure do not include a chain transfer agent.

An exemplary pre-adhesive composition comprises:
(a) 50 to 99 parts by weight of a polymerizable component comprising at least one acrylic or methacrylic ester of a non-tertiary alkyl alcohol in which the alkyl group contains 1 to 20 (e.g., 3 to 18) carbon atoms;
(b) 1 to 50 parts by weight of a polymerizable component comprising at least one reinforcing monomer, copolymerizable with component (a), such as acrylic acid, the sum of (a) and (b) amounting to 100 parts by weight;
(c) an effective amount of a polymerization initiator; and
d) an effective amount of a branching agent such as HDDA; and
(e) an effective amount of a copolymerizable photosensitive crosslinker such as ABP.
The polymerization initiator is generally a photoinitiator.

Typically, the pre-adhesive composition comprises 100 parts by weight of (meth)acrylate monomers, and may include other copolymerizable monomers. In some embodiments, the pre-adhesive composition comprises 90-99 parts by weight of an acrylate monomer selected from iso-octyl acrylate, 2-ethyl-hexyl acrylate, or butyl acrylate and 1-10 parts by weight of acrylic acid or N,N-dimethyl acrylamide. In some embodiments, the pre-adhesive composition comprises 90-95 parts by weight of an acrylate monomer selected from iso-octyl acrylate, 2-ethyl-hexyl acrylate, or butyl acrylate and 5-10 parts by weight of acrylic acid or N,N-dimethyl acrylamide. In some embodiments, the pre-adhesive composition also includes 0.1-0.5 parts by weight of acryloxybenzophenone (ABP) per 100 parts of (meth)acrylate monomers (that is to say the total of acrylate monomer and reinforcing monomer) or even 0.10-0.15 parts by weight of ABP and 0.001 - 0.05 parts by weight of 1,6-hexanediol diacrylate (HDDA) per 100 parts of (meth)acrylate monomers (that is to say the total of acrylate monomer and reinforcing monomer), or even 0.006 parts by weight of HDDA.

The pre-adhesive composition may comprise additional non-polymerizable additives to modify the properties of the formed polymer. Examples of such additives include tackifying resins, plasticizers, fillers, pigments, antioxidants, and the like. Such additives, if desired, are typically not added to the pre-adhesive composition, but are added during the hot melt mixing to form the hot melt blend containing the hot melt processable (meth)acrylate random copolymer, as will discussed in greater detail below.

The packaging material is made of a material that when combined with the adhesive does not substantially adversely affect the desired adhesive characteristics. The packaging material generally melts at or below the processing temperature of the adhesive (i.e., the temperature at which the adhesive flows). The packaging material typically has a melting point of 200°C or less, more typically 170°C or less. In some embodiments, the melting point ranges from 90°C to 150°C. The packaging material may be a flexible thermoplastic polymeric film. The packaging material is typically selected from ethylene-vinyl acetate, ethylene-acrylic acid, polypropylene, polyethylene, polybutadiene, or ionomeric films. In some embodiments, the packaging material is an ethylene-acrylic acid or ethylene-vinyl acetate film. Typically the films used to form the package range in thickness from about 0.01 mm to about 0.25 mm or even from about 0.025 mm to about 0.127 mm. Thinner films may be desirable to heat seal quickly and minimize the amount of film material used.

The amount of packaging material depends upon the type of material and the desired end properties. The amount of packaging material typically ranges from about 0.5 percent to about 20 percent of the total weight of the pre-adhesive composition and the packaging material, or between 2 percent and 15 percent by weight, or even between 3 percent and 5 percent. Such packaging materials may contain plasticizers, stabilizers, dyes, perfumes, fillers, slip agents, antiblock agents, flame retardants, anti-static agents, microwave susceptors, thermally conductive particles, electrically conductive particles, and/or other materials to increase the flexibility, handleability, visibility, or other useful property of the film, as long as they do not adversely affect the desired properties of the adhesive.

The packaging material should be appropriate for the polymerization method used. For example, with photopolymerization, it is necessary to use a film material that is sufficiently transparent to ultraviolet radiation at the wavelengths necessary to effect polymerization.

Typically, the pouches are prepared from two lengths of thermoplastic film that are heat sealed together across the bottom and on each of the lateral edges on a liquid form-fill-seal machine to form an open ended pouch. The pre-adhesive composition is then pumped through a hose to fill the pouch, and the pouch is then heat sealed across the top to completely surround the pre-adhesive composition.

Generally, the form-fill-seal machine is equipped with an impulse sealer to form the top and bottom seal across the pouches. Such a sealer has one or two sets of jaws that clamp the pouch shut before sealing. A sealing wire is then heated to effect the seal, and the seal is cooled before the jaws are released. The sealing temperature is generally above the softening point and below the melting point of the film used to form the pouch.

During the sealing process, it is desirable to get most of the air out of the pouch before sealing. A small amount of air is tolerable so long as the amount of oxygen is not sufficient to substantially interfere with the polymerization process. For ease of handling, it is desirable to seal the pouches as soon as they are filled with the composition, although immediate sealing is not necessary in all cases. In some cases the pre-adhesive composition can alter the packaging material, and it is desirable to cross-seal the pouches within about one minute of filling, or less. If the pre-adhesive composition decreases the strength of the packaging material, it is desirable to polymerize the composition as soon as possible after the pre-adhesive composition is surrounded by the packaging material. For the combination of acrylate monomers with ethylene acrylic acid, ethylene vinyl acetate, or ionomer films, it is desirable to polymerize the composition within about 24 hours of sealing the pouches.

While thermal polymerization could be used to prepare the hot melt processable (meth)acrylate random copolymer, typically polymerization is effected by exposure to ultraviolet (UV) radiation as described in U.S. Pat. No. 4,181,752 (Martens et al.). In some embodiments, the polymerization is carried out with UV black lights having over 60 percent, or over 75 percent of their emission spectra between 280 to 400 nanometers (nm), with an intensity between about 0.1 to about 25 mW/cm².

During photopolymerization it is desirable to control the temperature by blowing cooling air around the packaged pre-adhesive composition, by running the packaged pre-adhesive composition over a cooled platen, or by immersing the packaged pre-adhesive composition in a water bath or a heat transfer fluid during polymerization. Typically, the packaged pre-adhesive compositions are immersed in a water bath, with water temperatures between about 5°C and 90°C, generally below about 30°C. Agitation of the water or fluid helps to avoid hot spots during the reaction.

Typically, after exposing the pre-adhesive composition to transmissive energy and allowing polymerization of the pre-adhesive composition to occur, at least a portion of the pre-adhesive solution has been converted to an adhesive which comprises at least one polymer with a weight average molecular weight of at least 50,000. The weight average molecular weight of the polymerized adhesive composition can range from about 50,000 to about 3,000,000, or from about 100,000 to about 1,800,000, and more typically from about 200,000 to about 1,500,000.

A hot melt blend is prepared from the hot melt processable elastomeric (meth)acrylate random copolymer contained within a thermoplastic pouch and at least one tackifying resin. The tackifying resin or resins are added to the hot melt blend (and therefore the adhesive formed therefrom) at levels to give what are called in this disclosure a "highly tackified adhesive" (generally greater than 50 parts by weight tackifying resin per 100 parts by weight elastomeric (meth)acrylate random copolymer).

Typically, (meth)acrylate copolymer-based adhesives require little or no tackifying resins to achieve desired pressure sensitive adhesive properties. The use of high levels of tackifying agent(s) may be desirable because it can increase the tackiness of the pressure sensitive adhesive, making it aggressively adhere to wide range of substrates without the need to apply pressure. This is especially desirable with transfer tapes, in particular transfer tapes that are applied using a mechanical applicator. The addition of tackifying resin, especially high levels of tackifying resin, can detrimentally affect the shear and cohesive strength of a pressure sensitive adhesive, and can raise the Tg of the adhesive. The use of high levels of tackifying resin can be particularly detrimental to hot melt processable pressure sensitive adhesives where the need to be hot melt processable can already adversely affect the shear strength and cohesive strength properties of the adhesive. However, the adhesives of the present disclosure comprise greater than 50 parts by weight of tackifying resin per 100 parts of (meth)acrylate copolymer. This relatively high level of tackifying resin is achieved without significant negative effects on the shear properties of the adhesive. In some embodiments, the adhesives comprise 55-85 or even 55-80 parts or more by weight of tackifying resin per 100 parts of (meth)acrylate copolymer.

Suitable tackifying resins include, for example, terpene phenolics, rosins, rosin esters, esters of hydrogenated rosins, synthetic hydrocarbon resins and combinations thereof. Especially suitable tackifying resins include the commercially available tackifying resins: FORAL 3085 (a glycerol ester of highly hydrogenated refined wood rosin) commercially available from Hercules Inc., Wilmington, DE; and ESCOREZ 2520 (an aliphatic/aromatic hydrocarbon resin) commercially available from ExxonMobil Corp., Houston, TX.

In some embodiments, it may be desirable to use a mixture of two tackifying resins, where one of the tackifying resins comprises a high Tg tackifying resin with a glass transition temperature of at least 20°C, and the other comprises a low Tg tackifying resin with a glass transition temperature of no greater than 0°C. Such mixtures of tackifying resins are described, for example, in PCT Patent Publication No. WO 2010/002557 (Ma et al.). The high Tg tackifying resin is typically a solid at room temperature. Examples of suitable high Tg tackifying resin include, for example, terpenes, aliphatic- or aromatic-modified C5 to C9 hydrocarbons, and rosin esters. In some embodiments, lower molecular weight hydrocarbons may be preferred, as compatibility with the (meth)acrylic copolymer decreases as the molecular weight of the hydrocarbon increases. In some embodiments, the weight average molecular weight (Mw) of the high Tg tackifier is between 500 and 2000 gm/mole. In some embodiments, the Mw of the high Tg tackifier is no greater than 1500, in some embodiments no greater than 1000, or even no greater than 800 gm/mole.

The low Tg tackifying resin has a glass transition temperature of no greater than 0°C, in some embodiments, no greater than -10°C, or even no greater than -20°C. Such materials are generally liquids at room temperature. There is no particular lower limit on the glass transition temperature of the low Tg tackifying resin, except that it must be greater than the Tg the (meth)acrylate copolymer. In some embodiments, the Tg of the low Tg tackifying resin is at least 10°C greater, at least 20°C greater, or even at least 30°C greater than the Tg of the (meth)acrylate copolymer. Generally, lower molecular weight compounds may be more desirable, as compatibility with the acrylic copolymer decreases as the molecular weight of the increases. Exemplary low Tg tackifiers include terpene phenolic resins, terpenes, aliphatic- or aromatic-modified C5 to C9 hydrocarbons, and rosin esters. In some embodiments, the weight average molecular weight (Mw) of the low Tg tackifier is between 300 and 1500 gm/mole. In some embodiments, the Mw of the low Tg tackifier is no greater than 1000, in some embodiments, no greater than 800, or even no greater than 500 gm/mole.

In some embodiments, the adhesives comprise 35 to 65 parts by weight of the high Tg tackifying resin per 100 parts by weight elastomeric (meth)acrylate random copolymer. In some embodiments, the adhesives comprise at least 40 parts by weight of the high Tg tackifying resin per 100 parts by weight elastomeric (meth)acrylate random copolymer. In some embodiments, the adhesives comprise greater than 50 parts by weight or even at least 60 parts by weight of the high Tg tackifying resin per 100 parts by weight elastomeric (meth)acrylate random copolymer.

In some embodiments, the adhesives comprise 2 to 20 parts by weight of low Tg tackifying resin per 100 parts by weight elastomeric (meth)acrylate random copolymer. In some embodiments, the adhesives comprise at least 5 to 18, or even 5-17 parts by weight low Tg tackifying resin per 100 parts by weight elastomeric (meth)acrylate random copolymer.

A wide variety of commercially available tackifying resins are available and are suitable for use as the high Tg tackifying resin and the low Tg tackifying resin. Especially suitable High Tg tackifying resins include the commercially available tackifying resins: FORAL 3085 and FORAL 85LB resins commercially available from Hercules Inc., Wilmington, DE; and SP-553 from Schenectady International, Schenectady, NY, with FORAL 3085 being especially desirable. Especially suitable Low Tg tackifying resins include the commercially available tackifying resins: ESCOREZ 2520 commercially available from ExxonMobil Corp., Houston, TX, STAYBELITE Ester 3-E commercially available from Eastman Chemical, Kingsport, TN, PICCOLYTE AO commercially available from Hercules, Inc., Wilimington, DE, and HERCOLYN D commercially available from Hercules, Inc., Wilimington, DE, with ESCOREZ 2520 being especially desirable.

The hot melt blend prepared from a hot melt processable elastomeric (meth)acrylate random copolymer contained within a thermoplastic pouch and tackifying resins described above may contain additional additives, as long as the additives do not adversely affect the adhesive properties of the pressure sensitive adhesive. These additives may include, for example, plasticizers, crosslinkers, UV stabilizers, antistatic agents, colorants, antioxidants, fungicides, bactericides, organic and/or inorganic filler particles, and the like.

Optionally, low levels of plasticizer (e.g., less than about 10 parts by weight) may be added to the hot melt blend. A wide variety of commercially available materials described as "plasticizers" are suitable, as long as the added plasticizer is compatible with the other components of the hot melt blend. Representative plasticizers include polyoxyethylene aryl ether, dialkyl adipate, 2-ethylhexyl diphenyl phosphate, t-butylphenyl diphenyl phosphate, di(2-ethylhexyl) adipate, toluenesulfonamide, dipropylene glycol dibenzoate, polyethylene glycol dibenzoate, polyoxypropylene aryl ether, dibutoxyethoxyethyl formal, and dibutoxyethoxyethyl adipate. Especially suitable is the plasticizer SANTICIZER 141 (2-ethylhexyl diphenyl phosphate) commercially available from Ferro Corp., Cleveland, OH.

In order to increase the shear or cohesive strength of the pressure sensitive adhesive, a crosslinking additive may be incorporated into the hot melt blend. Many typical crosslinking additives are not suitable because they are thermally activated and can react during hot melt processing and prevent the adhesive from being processed. Suitable crosslinking additives, therefore, are able to be hot melt processed without being activated, but are activatable after hot melt processing has been completed.

Examples of such crosslinking additives include photosensitive crosslinkers that are activated by high intensity ultraviolet (UV) light. It is convenient, in some embodiments, to include the photosensitive crosslinker in the pouch with the polymer precursor, so that the photosensitive crosslinker can be copolymerized into the (meth)acrylate random copolymer, as described above. Therefore, the photosensitive crosslinker should not be activated by the UV light used to polymerize the (meth)acrylate random copolymer. Examples of suitable photosensitive crosslinkers that can be copolymerized into the (meth)acrylate random copolymer are ABP (4-acryloxybenzophenone) and AEBP (acryloxyethoxybenzophenone). Other photocrosslinkers that can be added to the hot melt blend for activation after the hot melt blend is processes and subsequently activated by UV light are benzophenone, 2-tert-butylanthroquinone, and triazines, for example 2,4-bis(trichloromethyl)-6-(4-methoxy-phenyl)-s-triazine. These crosslinkers are activated by UV light generated from artificial sources such as medium pressure mercury lamps or a UV blacklight.

Crosslinker is typically present from 0 to about 0.5 parts by weight based on 100 parts by weight of (meth)acrylate random copolymer. An especially suitable crosslinker is ABP, which is copolymerized into the (meth)acrylate random copolymer in the pouch.

In addition to the use of added photosensitive crosslinkers, crosslinking may also be achieved using high-energy electromagnetic radiation such as gamma or e-beam radiation. In this case, no crosslinking additive may be required.

The hot melt blends described above are used to form pressure sensitive adhesives upon completion of the hot melt blending process. The pressure sensitive adhesives comprise, as described above, a hot melt processable elastomeric (meth)acrylate random copolymer, a thermoplastic material, and greater than 50 parts by weight of at least one tackifying resin per 100 parts by weight of elastomeric (meth)acrylate random copolymer. The thermoplastic material is the residual material from the thermoplastic pouch and is dispersed relatively randomly throughout the pressure sensitive adhesive. In some embodiments, the thermoplastic material comprises ethylene-acrylic acid or ethylene-vinyl acetate.

In some embodiments, the pressure sensitive adhesive comprises a mixture of two tackifying resins, where one of the tackifying resins comprises a high Tg tackifying resin with a glass transition temperature of at least 20°C, and the other comprises a low Tg tackifying resin with a glass transition temperature of no greater than 0°C. As described above, the pressure sensitive adhesive may also comprise other optional additives, for example, plasticizers, crosslinkers, UV stabilizers, antistatic agents, colorants, antioxidants, fungicides, bactericides, organic and/or inorganic filler particles, and the like.

The methods described in this disclosure may be used to form a variety of adhesive articles. Among these adhesive articles are tapes, including transfer tapes. As described above, transfer tapes are free standing adhesive films with adhesive on both exposed surfaces. Transfer tapes are widely used in the printing and paper making industries for making flying splices, as well being used for a variety of bonding, mounting, and matting applications both by industry and by consumers.

Transfer tapes can be prepared by hot melt coating the hot melt blends described above onto a release surface such as a release liner. "Release liners" are well known film articles that have a low affinity for adhesives, especially pressure sensitive adhesives. A wide variety of release liners are known and are suitable for use with the pressure sensitive adhesives of this disclosure. Exemplary release liners include those prepared from paper (e.g., Kraft paper) or polymeric material (e.g., polyolefins such as polyethylene or polypropylene, ethylene vinyl acetate, polyurethanes, polyesters such as polyethylene terephthalate, and the like). At least some release liners are coated with a layer of a release agent such as a silicone-containing material or a fluorocarbon-containing material. Exemplary release liners include, but are not limited to, liners commercially available from CP Film (Martinsville, Va.) under the trade designation "T-30" and "T-10" that have a silicone release coating on polyethylene terephthalate film. The liner can have a microstructure on its surface that is imparted to the adhesive to form a microstructure on the surface of the adhesive layer. The liner can then be removed to expose an adhesive layer having a microstructured surface.

In many transfer tape embodiments, it is desirable that the transfer tape be hand tearable, that is to say that the dispensed adhesive can be torn by hand without the need for cutting of the transfer tape. This is particularly true when the transfer tape is dispensed from a bladeless hand held dispenser, such as the SCOTCH ATG dispensers commercially available from 3M Company, St. Paul, MN. The pressure sensitive adhesives of the present disclosure not only have the handling strength required of transfer tape, but also are typically hand tearable.

The present disclosure includes the following embodiments.

Among the embodiments are methods of preparing adhesives.
A first embodiment includes a method of preparing an adhesive comprising: providing a hot melt mixing apparatus; providing a hot melt processable elastomeric (meth)acrylate random co-polymer contained in a thermoplastic pouch; providing greater than 50 parts by weight per 100 parts by weight of hot melt processable elastomeric (meth)acrylate random co-polymer of at least one tackifying resin; mixing the hot melt processable elastomeric (meth)acrylate random co-polymer and the tackifying resin in the hot melt mixing apparatus to form a hot melt blend; and removing the hot melt blend from the hot melt mixing apparatus to form the adhesive.
Embodiment 2 is the method of embodiment 1, wherein the hot melt mixing apparatus comprises an extruder.
Embodiment 3 is the method of embodiment 1 or 2, wherein the at least one tackifying resin comprises a mixture of two tackifying resins.
Embodiment 4 is the method of embodiment 3, wherein one of the tackifying resins comprises a high Tg tackifying resin with a glass transition temperature of at least 20°C, and the other comprises a low Tg tackifying resin with a glass transition temperature of no greater than 0°C.
Embodiment 5 is the method of any of embodiments 1-4, wherein the hot melt processable elastomeric (meth)acrylate random co-polymer comprises a copolymer of at least one (meth)acrylate monomer which as a homopolymer has a Tg of less than 20°C and a reinforcing monomer, wherein the reinforcing monomer as a homopolymer has a Tg of greater than 20°C.
Embodiment 6 is the method of embodiment 5, wherein the reinforcing monomer comprises acidic or basic functionality.
Embodiment 7 is the method of embodiment 5 or 6, wherein the at least one (meth)acrylate monomer comprises an alkyl (meth)acrylate wherein the alkyl group comprises a linear or branched alkyl group with from 1 to about 20 carbon atoms.
Embodiment 8 is the method of any of embodiments 1-7, wherein the hot melt processable elastomeric (meth)acrylate random co-polymer comprises a copolymer of iso-octyl acrylate, 2-ethyl-hexyl acrylate, or butyl acrylate and acrylic acid or N,N-dimethylacrylamide.
Embodiment 9 is the method of any of embodiments 1-8, wherein the hot melt processable elastomeric (meth)acrylate random co-polymer further comprises a difunctional (meth)acrylate branching agent.
Embodiment 10 is the method of embodiment 9, wherein the difunctional (meth)acrylate branching agent comprises 0.001 - 0.010 parts by weight per 100 parts of (meth)acrylate monomers.
Embodiment 11 is the method of any of embodiments 9-10, wherein the difunctional (meth)acrylate branching agent comprises 1,6-hexanediol diacrylate.
Embodiment 12 is the method of any of embodiments 1-11, wherein the hot melt processable elastomeric (meth)acrylate random co-polymer further comprises a photosensitive crosslinker.
Embodiment 13 is the method of embodiment 12, wherein the photosensitive crosslinker comprises acryloyl benzophenone.
Embodiment 14 is the method of any of embodiments 12-13, wherein the photosensitive crosslinker comprises 0.1-0.2 parts by weight per 100 parts of (meth)acrylate monomers.
Embodiment 15 is the method of any of embodiments 1-14, wherein removing the hot melt blend from the hot melt mixing apparatus to form the adhesive article comprises hot melt coating the hot melt blend on a substrate.
Embodiment 16 is the method of embodiment 15, wherein the substrate comprises a release liner.
Embodiment 17 is the method of any of embodiments 1-16, wherein the formed adhesive article comprises a transfer tape.
Embodiment 18 is the method of any of embodiments 1-17, further comprising crosslinking the formed adhesive.

Among the embodiments are adhesives.
Embodiment 19 is an adhesive comprising: a hot melt processable elastomeric (meth)acrylate random co-polymer; at least one tackifying resin comprising greater than 50 parts by weight per 100 parts by weight of elastomeric (meth)acrylate random co-polymer; and a thermoplastic material; wherein the adhesive comprises a hot melt processable pressure sensitive adhesive.
Embodiment 20 is the adhesive of embodiment 19, wherein the at least one tackifying resin comprises a mixture of two tackifying resins, wherein one of the tackifying resins comprises a high Tg tackifying resin with a glass transition temperature of at least 20°C, and the other comprises a low Tg tackifying resin with a glass transition temperature of no greater than 0°C.
Embodiment 21 is the adhesive of embodiment 19 or 20, wherein the hot melt processable elastomeric (meth)acrylate random co-polymer comprises a copolymer of at least one (meth)acrylate monomer which as a homopolymer has a Tg of less than 20°C.
Embodiment 22 is the adhesive of embodiment 21, wherein the hot melt processable elastomeric (meth)acrylate random co-polymer further comprises a reinforcing monomer, wherein the reinforcing monomer as a homopolymer has a Tg of greater than 20°C.
Embodiment 23 is the adhesive of embodiment 22, wherein the reinforcing monomer comprises acidic or basic functionality.
Embodiment 24 is the adhesive of any of embodiments 21-23, wherein the at least one (meth)acrylate monomer comprises an alkyl (meth)acrylate wherein the alkyl group comprises a linear or branched alkyl group with from 1 to about 20 carbon atoms.
Embodiment 25 is the adhesive of any of embodiments 19-24, wherein the hot melt processable elastomeric (meth)acrylate random co-polymer comprises a copolymer of iso-octyl acrylate, 2-ethyl-hexyl acrylate, or butyl acrylate and acrylic acid or N,N-dimethylacrylamide.
Embodiment 26 is the method of any of embodiments 19-25, wherein the hot melt processable elastomeric (meth)acrylate random co-polymer further comprises a difunctional (meth)acrylate branching agent.
Embodiment 27 is the method of embodiment 26, wherein the difunctional (meth)acrylate branching agent comprises 0.001 - 0.05 parts by weight per 100 parts by weight of elastomeric (meth)acrylate random copolymer.
Embodiment 28 is the method of any of embodiments 26-27, wherein the difunctional (meth)acrylate branching agent comprises 1,6-hexanediol diacrylate.
Embodiment 29 is the method of any of embodiments 19-28, wherein the hot melt processable elastomeric (meth)acrylate random co-polymer further comprises a photosensitive crosslinker.
Embodiment 30 is the method of embodiment 29, wherein the photosensitive crosslinker comprises acryloyl benzophenone.
Embodiment 31 is the method of any of embodiments 28-29, wherein the photosensitive crosslinker comprises 0.1-0.5 parts by weight per 100 parts of (meth)acrylate monomers.
Embodiment 32 is the adhesive of any of embodiments 19-31, wherein the thermoplastic material comprises ethylene-acrylic acid or ethylene-vinyl acetate.
Embodiment 33 is the adhesive of any of embodiments 19-32, wherein the adhesive comprises a transfer tape.

### Examples

All parts, percentages, ratios, etc. in the examples and the rest of the specification are by weight, unless noted otherwise. Solvents and other reagents used were obtained from Sigma-Aldrich Chemical Company; Milwaukee, Wisconsin unless otherwise noted.

**Table of Abbreviations**

| Abbreviation or Trade Designation | Description |
|---|---|
| Tackifier-1 | Tackifying resin, a glycerol ester of highly hydrogenated refined wood rosin, commercially available from Hercules Inc. of Wilmington, DE as "FORAL 3085". |
| Tackifier-2 | Tackifying resin, aliphatic/aromatic hydrocarbon resin, commercially available from ExxonMobil Corp. of Houston, TX as "ESCOREZ 2520". |
| Photoinitiator-1 | Photoinitiator, 2,2-dimethoxy-1,2-diphenylethan-1-one commercially available from Ciba Specialty Chemicals Inc. of Hawthorne, NY as "IRGACURE 651". |
| Antioxidant-1 | Antioxidant, octadecyl-3-(3,5-di-*tert*-butyl-4-hydroxyphenyl)-propionate commercially available from Ciba Specialty Chemicals Inc. of Hawthorne, NY as "IRGANOX 1076". |
| Film-1 | A 2 mil (51 micrometer) thick primed, poly(ethylene terephthalate) (PET) film commercially available from Mitsubishi Polyester Film, Inc. of Greer, SC as "HOSTAPHAN 3SAB". |
| phr | Parts per hundred parts resin or parts by weight per parts of total monomer. |
| 2-EHA | 2-ethyl-hexyl acrylate |
| AA | Acrylic acid |
| ABP | acryloxybenzophenone |
| HDDA | 1,6-hexanediol diacrylate |
| IOTG | isooctyl thioglycolate, chain transfer agent |

### Test Methods

### Preparation of samples for testing:

Samples of pressure sensitive adhesive tapes for testing were prepared by laminating the adhesive tape onto a sheet of Film-1. The laminated adhesives, with the liner intact, were conditioned in a constant temperature and humidity (CTH) room at 23°C and 50% relative humidity (RH) for at least 18 hours before testing.

### Shear strength on stainless steel (SS):

The shear strength was determined following ASTM Designation: D 3654/D 3654M-06. A 0.5 inch (1.3 cm) wide strip of adhesive was laminated (using a 4.5 lb (2.0 kg) roller) onto a stainless steel panel, covering a 0.5 inch by 1 inch (1.3 cm x 2.6 cm) area of the panel. A 500 gram weight was used as the static load, and the test samples were placed on an automated timing apparatus in a CTH room (23°C/50% RH). The mode of failure for all samples was cohesive failure. The data is reported as an average of two measurements for each test.

### Rolling ball tack:

The tack was determined by following ASTM Designation: D3121-06 with a few minor adjustments. A 1 inch by 14 inch (2.6 x 35.6 cm) strip of adhesive tape was aligned at the bottom of a standard inclined trough. A clean ½ inch (1.3 cm) diameter stainless steel ball is released from the top of the inclined trough and allowed to roll to a stop on the PSA. The distance from the point where the ball initially contacted the adhesive to where the ball stopped was measured. Five measurements were obtained, and the average of the median three values was reported as the rolling ball tack.

### 180° Peel adhesion to glass:

In a CTH room, 1 0.5 inch (1.3 cm) wide strip of the adhesive was laminated (using a 4.5 lb (2 kg) roller) onto an glass plate (EAGLE 2000 LCD glass plate available from Corning Display Technologies, Corning, NY). After a dwell time of 15 minutes in the CTH room, a 180° peel test was performed using a Model SP-102B-3M90 slip/peel tester (manufactured by Instrumentors, Inc., Strongville, OH) at 12 inches/min (30 cm/min), with data collected and averaged over 10 seconds, according to the standard tape testing method ASTM Designation: D3330/D330M-04. The observed mode of failure was noted: coh = cohesive failure, clean = interfacial adhesion failure between the adhesive and the substrate, ghost = mostly interfacial adhesion failure between the adhesive and the substrate, with a light residue left on the substrate, 2B (2-bond) = interfacial adhesion failure between the adhesive and the tape backing. Data was recorded in ounces/inch and converted to Newtons/decimeter (N/dm).

### 90° Peel adhesion to HDPE:

In a CTH room, a 0.5 inch (1.3 cm) wide strip of the adhesive was laminated (using a 4.5 lb (2.0 kg) roller) onto high density polyethylene (HDPE) panel. After a dwell time of 15 minutes, a 90° peel test was performed using a Model SP-102B-3M90 slip/peel tester (manufactured by Instrumentors, Inc., Strongville, OH) at 12 inches/min (30 cm/min), with data collected and averaged over 10 seconds, according to the standard tape method testing method ASTM Designation: D3330/D330M-04. Failure modes were noted as in the 180° Peel adhesion test. Data was recorded in ounces/inch and converted to Newtons/decimeter (N/dm).

### Determination of Gel Content of Polymer:

The gel content of each polymer formulation was determined by ASTM D3616-95 with the following modifications, described in US Patent No. 6,677,402. A sample of crosslinked polymer, without tackifiers and fibers, weighing 0.06 gram was placed in a 120-mesh stainless steel basket measuring approximately 5 cm x 5 cm. The contents were weighed to the nearest 0.1 mg and then immersed in a capped jar containing sufficient toluene to keep the sample covered, even when swollen. After 30 hours, the basket with the remaining gel was removed, drained, placed in an oven at set 70°C and dried to a constant weight. The gel weight was determined and the Gel Content was calculated as a percent of the original polymer weight.

### Synthesis Examples:

### Synthesis Example S1: Preparation of Copolymer 1 hot melt pressure sensitive adhesive:

A copolymer of 2-EHA and AA was bulk polymerized under UV light sealed in ethylene vinyl acetate film pouches as described in U.S. Patent No. 6,294,249 (Hamer et al.). Two sheets of 2.5 mil (51 micrometer) thick ethylene vinyl acetate, commercially available as VA-24 from Pliant Corp. of Evansville, IN, were heat sealed on the lateral edges and the bottom to form a rectangular pouch on a liquid form, fill, and seal machine. The pouch was filled with a pre-adhesive composition having 94 parts 2-EHA, 6 parts AA, 0.15 phr of Photoinitiator-1, 0.15 phr ABP, 0.4 phr Antioxidant-1, and 0.006 phr HDDA branching monomer/crosslinker. The filled package was then heat sealed at the top in the cross direction through the monomer to form individual pouches measuring 13.4 cm by 4.3 cm by about 0.4 cm thick containing 27 grams of the pre-adhesive composition. The pouches were placed in a water bath that was maintained between about 16°C and 32°C and exposed to ultraviolet radiation (supplied by lamps having about 90 percent of the emissions between 300 and 400 nanometers (nm), and a peak emission at 351 nm) at an intensity of 4.55 mW/cm² for 21 minutes.

### Synthesis Example S2: Preparation of Copolymer 2 hot melt pressure sensitive adhesive:

A pressure sensitive adhesive was prepared as described for Synthesis Example S1 except that the ratio of 2-EHA/AA was 96/4.

### Comparative Example C1:

Comparative Example 1 was a solvent-coated 5 mil (0.13 mm) thick transfer tape, available as 950 Adhesive Transfer Tape from 3M Company, Saint Paul, MN.

### Example 1:

A 30 mm diameter co-rotating twin screw extruder, available as "ZSK-30" from Werner & Pfleiderer, Ramsey, NJ, was used to prepare a pressure sensitive adhesive coated tape. The twin screw extruder had 12 zones, each corresponding to one twelfth of the length of the screw, and a length to diameter ratio of 36:1. The twin screw extruder was operated at 400 rpm at 325°F (163°C). Copolymer 1 in pouches was fed into a 2 inch (51 mm) Single Packer Extruder commercially available from Bonnot, Uniontown, OH. The Single Packer Extruder masticated the polymer and fed it into zone 2 of the twin screw extruder at a rate of 42.8 grams/minute. Tackifier-2 was fed at a rate of 7.2 grams/minute into zone 4 of the extruder from a Dynamelt S Series Adhesive Supply Unit from ITW Dynatec, Hendersonville, TN, set at 250°F (121°C). Tackifier-1 was fed via a split stream at a rate of 7.7 grams/minute into zone 4 and at a rate of 18.0 grams/minute into zone 6 of the extruder from a Dynamelt S Series Adhesive Supply Unit, set at 300°F (149°C). The melt mixture passed from the extruder into a polymer melt pump set at 350°F (177°C) (commercially available as "PEP-II 3 cc/rev" from Zenith Pumps of Monroe, NC) which pumped it at a rate of 2.92 cm³/revolution into a rotary rod die set to 325°F (163°C). The melt mixture was coated onto a silicone-coated, densified kraft paper release liner as a continuous sheet of pressure sensitive adhesive having about 5 mil (0.13 mm) thickness. The coated PSA was then crosslinked by UV irradiation, using a medium pressure mercury lamp, with a dose of 36 mJ/cm² UVC, as measured by a UV Power Puck from EIT, Inc. (Sterling, VA). Adhesive properties were then measured and are reported in Table 2.

### Example 2 and Comparative Examples C2-C6:

Example 2 and Comparative Examples C2-C6 were prepared as described in Example 1, except that the twin screw extruder was operated at 300 rpm at 350°F (177°C), the rotary rod die was set to 350°F (177°C), various concentrations of tackifiers were added, and the dose of UV energy was varied as shown in Table 1. Adhesive properties were then measured and are reported in Table 2.

**Table 1**

| Example | Tackifier-1 (phr) | Tackifier-2 (phr) | UV dose (mJ/cm² UVC) |
|---|---|---|---|
| C1 | -- | -- | 0 |
| 1 | 60 | 16.8 | 36 |
| 2 | 60 | 12.5 | 25 |
| C2 | 40 | 5 | 15 |
| C3 | 40 | 0 | 5 |
| C4 | 20 | 0 | 5 |
| C5 | 10 | 0 | 4 |
| C6 | 0 | 0 | 3 |

**Table 2**

| Example | Shear Strength (minutes) | Rolling Ball Tack (mm) | 180° Peel on Glass | | 90° Peel on HDPE | |
|---|---|---|---|---|---|---|
| | | | oz/in (N/dm) | Failure Mode | oz/in (N/dm) | Failure Mode |
| C1 | 734 | 40 | 122 (134) | coh | 30 (33) | clean |
| 1 | 1964 | 44 | 129 (141) | coh / 2 bond | 38 (42) | clean |
| 2 | 862 | 42 | 114 (125) | 2 bond | 41 (45) | clean |
| C2 | 1346 | 35 | 95 (104) | clean | 33 (36) | clean |
| C3 | 850 | 39 | 77 (84) | clean | 29 (32) | clean |
| C4 | 1041 | 24 | 70 (77) | clean | 15 (16) | clean |
| C5 | 1682 | 30 | 70 (77) | clean | 7.7 (8.4) | clean |
| C6 | 1335 | 31 | 58 (63) | clean | 4.6 (5.0) | clean |

### Examples 3-7 (Examples 4, 6 and 7 are not according to the invention):

Pressure sensitive adhesives for Examples 3-7 were compounded and extruded in a 30 mm diameter co-rotating twin screw extruder, available as "ZSK-30" from Werner & Pfleiderer, Ramsey, NJ. The extruder had 5 zones, each corresponding to one fifth of the length of the screw, and a length to diameter ratio of 15:1. The twin screw extruder was operated with melt temperatures of 270-330°F (132-166°C). All of the ingredients of the compositions were fed into the extruder manually via an open port. All of the adhesive compositions are shown in Table 3, and each included 100 parts of Copolymer 1 or Copolymer 2, 60 phr Tackifier-1, 10 phr Tackifier-2, and 7 phr of PET fibers (1.5 denier, 6 mm) obtained from William Barnet & Son, LLC of Arcadia, SC. All of the pouched polymers used in Examples 3-7 also included 0.006 phr HDDA except Example 5, and Example 6 also included 0.03 phr of IOTG chain transfer agent. The compositions were mixed in the extruder for 4 minutes at a screw speed of 400 rpm with the extruder outlet closed. Then the screw speed was reduced to 100 rpm and the extruder outlet was opened to coat the pressure sensitive adhesive onto a silicone-coated release liner. After coating, the adhesives were heat pressed (at 141°C and 13.6 metric tons for 1 min) between release liners in a PHI Manual Compression Press, available as Model 0-238H from PHI-Tulip of City of Industry, CA, to the thicknesses shown in Table 3. The pressure sensitive adhesives were crosslinked at 36 mJ/cm² UVC, except Example 4 which was not crosslinked. The adhesives were laminated to Film-1 according to the preparation of samples for testing protocol described above, and tested for tack, shear strength and peel strength. Results are shown in Table 4.

**Table 3**

| Example | Copolymer Identity | HDDA (phr) | IOTG (phr) | UV dose (mJ/cm² UVC) | Gel (%) | Thickness (mm) |
|---|---|---|---|---|---|---|
| 3 | 1 | 0.006 | 0 | 36 | 89 | 0.114 |
| 4 | 1 | 0.006 | 0 | 0 | 89 | 0.127 |
| 5 | 1 | 0 | 0 | 36 | 64 | 0.101 |
| 6 | 1 | 0.006 | 0.03 | 36 | 33 | 0.114 |
| 7 | 2 | 0.006 | 0 | 36 | 87 | 0.114 |

**Table 4**

| Example | Shear Strength (min) | Rolling Ball tack (mm) | 180° Peel on Glass oz/in (N/dm) | Failure Mode of Peel Test |
|---|---|---|---|---|
| 3 | 3716 | 104 | 100 (109) | clean |
| 4 | 69 | 75 | 118 (129) | coh |
| 5 | 1650 | 65 | 120 (131) | ghost |
| 6 | 226 | 55 | 98 (107) | clean |
| 7 | 193 | 17 | 107 (117) | coh |

## Claims

1. A method of preparing an adhesive comprising:
providing a hot melt mixing apparatus;
providing a hot melt processable elastomeric (meth)acrylate random copolymer contained within a thermoplastic pouch;
providing greater than 50 parts by weight per 100 parts by weight of hot melt processable elastomeric (meth)acrylate random copolymer of at least one tackifying resin;
mixing the hot melt processable elastomeric (meth)acrylate random copolymer contained within a thermoplastic pouch and
the tackifying resin in the hot melt mixing apparatus to form a hot melt blend; and
removing the hot melt blend from the hot melt mixing apparatus to form a hot melt processable pressure sensitive adhesive;
wherein the hot melt processable elastomeric (meth)acrylate random copolymer does not include a chain transfer agent; wherein the hot melt processable elastomeric (meth)-acrylate random copolymer comprises a copolymer of (i) 90-95 parts by weight of an acrylate monomer selected from isooctyl acrylate, 2-ethyl-hexyl acrylate,
or butyl acrylate and (ii) 5-10 parts by weight of acrylic acid or N,N-dimethylacrylamide; wherein the hot melt processable elastomeric (meth)acrylate random copolymer further comprises a photosensitive crosslinking agent and
wherein the method further comprises crosslinking the adhesive.

2. The method of claim 1, wherein the hot melt mixing apparatus comprises an extruder.

3. The method of any of the preceding claims, wherein the at least one tackifying resin comprises a mixture of two tackifying resins, wherein one of the tackifying resins comprises a high Tg tackifying resin with a glass transition temperature of at least 20°C, and the other comprises a low Tg tackifying resin with a glass transition temperature of no greater than 0°C.

4. The method of any of the preceding claims, wherein the hot melt processable elastomeric (meth)acrylate random copolymer further comprises a difunctional (meth)acrylate branching agent.

5. The method of any of the preceding claims, wherein the hot melt processable elastomeric (meth)acrylate random copolymer comprises a copolymer of isooctyl acrylate, 2-ethyl-hexyl acrylate, or butyl acrylate and acrylic acid.

6. The method of any of the preceding claims, wherein removing the hot melt blend from the hot melt mixing apparatus to form the hot melt processable pressure sensitive adhesive article comprises hot melt coating the hot melt blend on a substrate.

7. An adhesive comprising:
a hot melt processable elastomeric (meth)acrylate random copolymer;
at least one tackifying resin comprising greater than 50 parts by weight per 100 parts by weight of elastomeric (meth)acrylate random copolymer; and
a thermoplastic material;
wherein the adhesive comprises a hot melt processable pressure sensitive adhesive;
wherein the hot melt processable elastomeric (meth)acrylate random copolymer does not include a chain transfer agent; wherein the hot melt processable elastomeric (meth)-acrylate random copolymer comprises a copolymer of (i) 90-95 parts by weight of an acrylate monomer selected from isooctyl acrylate, 2-ethyl-hexyl acrylate, or butyl acrylate and (ii) 5-10 parts by weight of acrylic acid or N,N-dimethylacrylamide; wherein the hot melt processable elastomeric (meth)acrylate random copolymer further comprises a photosensitive crosslinking agent; and wherein the adhesive is crosslinked.

8. The adhesive of claim 7, wherein the at least one tackifying resin comprises a mixture of two tackifying resins, wherein one of the tackifying resins comprises a high Tg tackifying resin with a glass transition temperature of at least 20°C, and the other comprises a low Tg tackifying resin with a glass transition temperature of no greater than 0°C.

9. The adhesive of claim 7, wherein the hot melt processable elastomeric (meth)acrylate random copolymer further comprises a difunctional (meth)acrylate branching agent.

10. The adhesive of any of claims 7 to 9, wherein the hot melt processable elastomeric (meth)acrylate random copolymer comprises a copolymer of isooctyl acrylate, 2-ethyl-hexyl acrylate, or butyl acrylate and acrylic acid.

## Patentansprüche

1. Ein Verfahren zur Herstellung eines Klebstoffs, umfassend:
Bereitstellen einer Heißschmelzmischvorrichtung;
Bereitstellen eines durch Heißschmelzen verarbeitbaren, elastomeren statistischen (Meth)acrylatcopolymers, das in einem thermoplastischen Beutel enthalten ist;
Bereitstellen von mehr als 50 Gewichtsteilen pro 100 Gewichtsteile eines durch Heißschmelzen verarbeitbaren elastomeren statistischen (Meth)acrylatcopolymers von mindestens einem klebrigmachenden Harz;
Mischen des in einem thermoplastischen Beutel enthaltenen, durch Heißschmelzen verarbeitbaren elastomeren statistischen (Meth)acrylatcopolymers und des klebrigmachenden Harzes in der Heißschmelzmischvorrichtung, um eine Heißschmelzmischung zu bilden; und
Entfernen der Heißschmelzmischung aus der Heißschmelzmischvorrichtung zum Bilden eines durch Heißschmelzen verarbeitbaren Haftklebemittels;
wobei das durch Heißschmelzen verarbeitbare elastomere statistische (Meth)acrylatcopolymer kein Kettentransfermittel beinhaltet; wobei das durch Heißschmelzen verarbeitbare elastomere statistische (Meth)acrylatcopolymer ein Copolymer von (i) 90-95 Gewichtsteilen eines Acrylatmonomers, ausgewählt aus Isooctyl-acrylat, 2-Ethylhexyl-acrylat oder Butylacrylat, und (ii) 5-10 Gewichtsteilen Acrylsäure oder N,N-Dimethyl-acrylamid umfasst; wobei das durch Heißschmelzen verarbeitbare elastomere statistische (Meth)acrylatcopolymer ferner ein lichtempfindliches Vernetzungsmittel umfasst und wobei das Verfahren ferner das Vernetzen des Klebstoffs umfasst.

2. Das Verfahren nach Anspruch 1, wobei die Heißschmelzmischvorrichtung einen Extruder umfasst.

3. Das Verfahren nach einem der vorstehenden Ansprüche, wobei das mindestens eine klebrigmachende Harz eine Mischung aus zwei klebrigmachenden Harzen umfasst, wobei eines der klebrigmachenden Harze ein klebrigmachendes Harz mit hoher Tg mit einer Glasübergangstemperatur von mindestens 20 °C umfasst und das andere ein klebrigmachendes Harz mit niedriger Tg mit einer Glasübergangstemperatur von nicht mehr als 0 °C umfasst.

4. Das Verfahren nach einem der vorstehenden Ansprüche, wobei das durch Heißschmelzen verarbeitbare, elastomere statistische (Meth)acrylatcopolymer ferner ein difunktionelles (Meth)acrylatverzweigungsmittel umfasst.

5. Das Verfahren nach einem der vorstehenden Ansprüche, wobei das durch Heißschmelzen verarbeitbare, elastomere statistische (Meth)acrylatcopolymer ein Copolymer von Isooctyl-acrylat, 2-Ethylhexyl-acrylat oder Butylacrylat und Acrylsäure umfasst.

6. Das Verfahren nach einem der vorstehenden Ansprüche, wobei das Entfernen der Heißschmelzmischung aus der Heißschmelzmischvorrichtung zum Bilden des durch Heißschmelzen verarbeitbaren Haftklebemittelgegenstands das Heißschmelzauftragen der Heißschmelzmischung auf ein Substrat umfasst.

7. Ein Klebstoff, umfassend:
ein durch Heißschmelzen verarbeitbares, elastomeres statistisches (Meth)acrylatcopolymer;
mindestens ein klebrigmachendes Harz, umfassend mehr als 50 Gewichtsteile pro 100 Gewichtsteile eines statistischen elastomeren (Meth)acrylatcopolymers; und
ein thermoplastisches Material;
wobei der Klebstoff ein durch Heißschmelzen verarbeitbares Haftklebemittel umfasst;
wobei das durch Heißschmelzen verarbeitbare elastomere statistische (Meth)acrylatcopolymer kein Kettentransfermittel beinhaltet; wobei das durch Heißschmelzen verarbeitbare elastomere statistische (Meth)acrylatcopolymer ein Copolymer von (i) 90-95 Gewichtsteilen eines Acrylatmonomers, ausgewählt aus Isooctyl-acrylat, 2-Ethylhexyl-acrylat oder Butylacrylat, und (ii) 5-10 Gewichtsteilen Acrylsäure oder N,N-Dimethyl-acrylamid umfasst; wobei das durch Heißschmelzen verarbeitbare elastomere statistische (Meth)acrylatcopolymer ferner ein lichtempfindliches Vernetzungsmittel umfasst und wobei der Klebstoff vernetzt ist.

8. Der Klebstoff nach Anspruch 7, wobei das mindestens eine klebrigmachende Harz eine Mischung aus zwei klebrigmachenden Harzen umfasst, wobei eines der klebrigmachenden Harze ein klebrigmachendes Harz mit hoher Tg mit einer Glasübergangstemperatur von mindestens 20 °C umfasst und das andere ein klebrigmachendes Harz mit niedriger Tg mit einer Glasübergangstemperatur von nicht mehr als 0 °C umfasst.

9. Der Klebstoff nach Anspruch 7, wobei das durch Heißschmelzen verarbeitbare, elastomere statistische (Meth)acrylatcopolymer ferner ein difunktionelles (Meth)acrylatverzweigungsmittel umfasst.

10. Der Klebstoff nach einem der Ansprüche 7 bis 9, wobei das durch Heißschmelzen verarbeitbare, elastomere statistische (Meth)acrylatcopolymer ein Copolymer von Isooctyl-acrylat, 2-Ethylhexyl-acrylat oder Butylacrylat und Acrylsäure umfasst.

## Revendications

1. Procédé de préparation d'un adhésif, comprenant :
la fourniture d'un appareil de mélange par fusion à chaud ;
la fourniture d'un copolymère statistique (méth)acrylate élastomère pouvant être traité en fusion à chaud
contenu au sein d'une pochette thermoplastique ;
la fourniture de plus de 50 parties en poids pour 100 parties en poids de
copolymère statistique (méth)acrylate élastomère pouvant être traité en fusion à chaud, d'au moins une résine poisseuse ;
le mélange du copolymère statistique (méth)acrylate élastomère pouvant être traité en fusion à chaud contenu au sein d'une pochette thermoplastique et
de la résine poisseuse dans l'appareil de mélange par fusion à chaud pour former un mélange thermofusible ; et
retirer le mélange thermofusible de l'appareil de mélange par fusion à chaud pour former un
adhésif sensible à la pression pouvant être traité par fusion à chaud ;
dans lequel le copolymère statistique (méth)acrylate élastomère pouvant être traité en fusion à chaud n'inclut pas d'agent de transfert de chaîne ; dans lequel le copolymère statistique (méth)acrylate élastomère pouvant être traité en fusion à chaud comprend un copolymère de (i) 90 à 95 parties en poids d'un monomère d'acrylate choisi parmi l'acrylate d'isooctyle, l'acrylate de 2-éthyl-hexyle, ou l'acrylate de butyle et (ii) 5 à 10 parties en poids d'acide acrylique ou de N,N-diméthyl-acrylamide ; dans lequel le copolymère statistique (méth)acrylate élastomère pouvant être traité en fusion à chaud comprend en outre un agent de réticulation photosensible et dans lequel le procédé comprend en outre la réticulation de l'adhésif.

2. Procédé selon la revendication 1, dans lequel l'appareil de mélange par fusion à chaud comprend une extrudeuse.

3. Procédé selon l'une quelconque des revendications précédentes, dans lequel ladite au moins une résine poisseuse comprend un mélange de deux résines poisseuses, dans lequel une des résines poisseuses comprend une résine poisseuse à Tg élevée avec une température de transition vitreuse d'au moins 20 °C, et l'autre comprend une résine poisseuse à faible Tg avec une température de transition vitreuse n'excédant pas 0 °C.

4. Procédé selon l'une quelconque des revendications précédentes, dans lequel le copolymère statistique (méth)acrylate élastomère pouvant être traité en fusion à chaud comprend en outre un agent de ramification (méth)acrylate difonctionnel.

5. Procédé selon l'une quelconque des revendications précédentes, dans lequel le copolymère statistique (méth)acrylate élastomère pouvant être traité en fusion à chaud comprend un copolymère d'acrylate d'isooctyle, d'acrylate de 2-éthyl-hexyle, ou d'acrylate de butyle et d'acide acrylique.

6. Procédé selon l'une quelconque des revendications précédentes, dans lequel le retrait du mélange thermofusible de l'appareil de mélange par fusion à chaud pour former l'article adhésif sensible à la pression pouvant être traité en fusion à chaud comprend le revêtement par fusion à chaud du mélange thermofusible sur un substrat.

7. Adhésif comprenant :
un copolymère statistique (méth)acrylate élastomère pouvant être traité en fusion à chaud ;
au moins une résine poisseuse comprenant plus de 50 parties en poids pour 100 parties en poids de copolymère statistique (méth)acrylate élastomère ; et
un matériau thermoplastique ;
dans lequel l'adhésif comprend un adhésif sensible à la pression pouvant être traité en fusion
à chaud ;
dans lequel le copolymère statistique (méth)acrylate élastomère pouvant être traité en fusion à chaud n'inclut pas d'agent de transfert de chaîne ; dans lequel le copolymère statistique (méth)acrylate élastomère pouvant être traité en fusion à chaud comprend un copolymère de (i) 90 à 95 parties en poids d'un monomère d'acrylate choisi parmi l'acrylate d'isooctyle, l'acrylate de 2-éthyl-hexyle, ou l'acrylate de butyle et (ii) 5 à 10 parties en poids d'acide acrylique ou de N,N-diméthyl-acrylamide ; dans lequel le copolymère statistique (méth)acrylate élastomère pouvant être traité en fusion à chaud comprend en outre un agent de réticulation photosensible ; et dans lequel l'adhésif est réticulé.

8. Adhésif selon la revendication 7, dans lequel ladite au moins une résine poisseuse comprend un mélange de deux résines poisseuses, dans lequel une des résines poisseuses comprend une résine poisseuse à Tg élevée avec une température de transition vitreuse d'au moins 20 °C, et l'autre comprend une résine poisseuse à faible Tg avec une température de transition vitreuse n'excédant pas 0 °C.

9. Adhésif selon la revendication 7, dans lequel le copolymère statistique (méth)acrylate élastomère pouvant être traité en fusion à chaud comprend en outre un agent de ramification (méth)acrylate difonctionnel.

10. Adhésif selon l'une quelconque des revendications 7 à 9, dans lequel le copolymère statistique (méth)acrylate élastomère pouvant être traité en fusion à chaud comprend un copolymère d'acrylate d'isooctyle, d'acrylate de 2-éthyl-hexyle, ou d'acrylate de butyle et d'acide acrylique.
